# EUROPÄISCHE PATENTANMELDUNG

(11) **EP 0 715 382 A1**
(43) Veröffentlichungstag der Anmeldung: **05.06.1996**
(21) Anmeldenummer: 95117304.6
(22) Anmeldetag: 03.11.1995
(51) Int. Cl.: H02B 1/04, B60R 16/02

(54) **Vorrichtung zur Befestigung eines Gehäuses**

(30) Priorität: 30.11.1994 DE 4442484
(71) Anmelder: TEMIC TELEFUNKEN microelectronic GmbH, D-74072 Heilbronn (DE)
(72) Erfinder: Seitz, Georg, D-85092 Kösching (DE); Pröll, Leo, D-92345 Dietfurt (DE); Griesbach, Peter, D-75395 Ostelsheim (DE)
(74) Vertreter: Maute, Hans-Jürgen, Dipl.-Ing.

(57) **Zusammenfassung**

Zur Befestigung eines Gehäuses (1) auf einer Befestigungsplatte (2) sind Einhakmittel, insbesondere Untergreifvorrichtungen (3) an dem Gehäuse (1) vorgesehen, so daß diese in entsprechende Durchbrüche (4) auf der Befestigungsplatte (2) eingeführt werden können. Beim anschließenden Andrücken des Gehäuses (1) auf die Befestigungsplatte (2) greifen sowohl an dem Gehäuse (1) als auch auf der Befestigungsplatte (2) vorgesehene Verrastungsmittel (5,6) derart ineinander, daß eine sichere und feste Verbindung zwischen dem Gehäuse (1) und der Befestigungsplatte (2) entsteht, ohne jedoch Schrauben, Nieten oder sonstige Befestigungsmittel zu verwenden.

## Beschreibung

Die Erfindung betrifft eine Vorrichtung zur Befestigung eines Gehäuses auf einer Befestigungsplatte.

Es ist bekannt, elektronische Baugruppen aufnehmende Gehäuse mittels Schrauben, Nieten oder Schweißverbindungen auf einer Befestigungsplatte zu montieren. Insbesondere besteht bei der Montage eines solchen Gehäuses in einem Kraftfahrzeug die Anforderung, daß die Befestigung zwischen dem Gehäuse und der Befestigungsplatte erschütterungsfest ausgeführt sein muß, insbesondere auch dann, wenn beispielsweise dieses Gehäuse in der Tür eines Kraftfahrzeuges untergebracht ist. Die Durchführung einer solchen Montage mittels Schrauben, Mieten oder einer Schweißverbindung ist aufwendig und führt so zu hohen Montagekosten.

Die Aufgabe der vorliegenden Erfindung besteht daher darin, eine Vorrichtung zur Befestigung eines Gehäuses auf einer Befestigungsplatte anzugeben, die einfach zu realisieren und kostengünstig durchführbar ist.

Die Lösung dieser Aufgabe ist durch die kennzeichnenden Merkmale des Patentanspruches 1 gegeben. Hiernach weist das Gehäuse als auch die Befestigungsplatte zum Einhaken des Gehäuses in diese Befestigungsplatte Einhakmittel auf. Des weiteren sind Verrastungsmittel auf dem Gehäuse als auch auf der Befestigungsplatte vorgesehen, die derart zusammenwirken, daß beim anschließenden Andrücken des Gehäuses an die Befestigungsplatte eine Verrastung zwischen der Befestigungsplatte und dem Gehäuse entsteht. Diese erfindungsgemäßen Mittel zum Einhaken des Gehäuses in die Befestigungsplatte als auch die Verrastungsmittel können in kostengünstiger und einfacher Weise durch Anformung an das Gehäuse realisiert werden, beispielsweise durch entsprechende Spritzgußteile, falls ein Kunststoffgehäuse vorgesehen ist. Die entsprechenden aufnehmenden Mittel auf der Befestigungsplatte sind in ebenso einfacher Weise zu realisieren, so daß ingesamt ein schneller Montagevorgang durchführbar ist.

Bei einer vorteilhaften Ausführungsform der erfindungsgemäßen Befestigungsvorrichtung ist an dem Gehäuse eine Untergreifvorrichtung, insbesondere ein Untergreifhaken oder eine pilzförmig ausgebildete Untergreifvorrichtung vorgesehen, die die Befestigungsplatte durch eine Öffnung hindurch untergreift. Dadurch kann beim Montieren des Gehäuses durch Schrägstellung desselben die Untergreifvorrichtung leicht in die Öffnungen der Befestigungsplatte eingeführt werden, um anschließend durch Einschwenken der Verrastungsmittel in Richtung der Befestigungsplatte die Montagestellung des Gehäuses zu erreichen.

Um insbesondere eine spielfreie Montage des Gehäuses auf der Befestigungsplatte zu erzielen, sind bei einer weiteren vorteilhaften Weiterbildungsform der Erfindung im Bereich der Mittel zum Einhaken des Gehäuses in die Befestigungsplatte auf dem Gehäuse Auflagenoppen vorgesehen, wodurch eine Verspannung zwischen den Einhakmitteln und den Verrastungsmitteln erzielt wird. Insbesondere wird dies dadurch erreicht, daß die Höhe der Auflagenoppen der lichten Weite der Untergreifvorrichtungen abzüglich der Dicke der Befestigungsplatte entspricht.

Die Verrastungsmittel bestehen bei einer bevorzugten Ausführungsform der Erfindung aus mit dem Gehäuse verbundenen Einrasthaken, die in auf der Befestigungsplatte vorgesehenen Öffnungen eingreifen. Um eine sichere Verrastung zu gewährleisten, können die Einrasthaken vorzugsweise eine Einrastnut und ein keilförmig ausgebildetes Hakenende aufweisen, wobei die Keilfläche das Hakenende mit dem Nutrand verbindet. Weiterhin kann zwecks spielfreier Klemmung der Befestigungsplatte eine Klemmnoppe an dem Einrasthaken vorgesehen werden, die auf der dem Hakenende abgewandten Seite der Einrastnut angeordnet ist. Dabei kann die Klemmnoppe eine auf die Nut schräg zulaufende Fläche aufweisen.

Bei Verwendung von Einrasthaken kann die Sicherheit der Befestigung noch dadurch erhöht werden, daß gleichzeitig in eine Öffnung zwei Einrasthaken während des Montagevorganges einrasten. Dabei können diese Einrasthaken so angeordnet sein, daß deren Einrastrichtung auf einer Geraden liegen, jedoch entgegengesetzt gerichtet sind.

Zur Gewährleistung einer für die Verrastung sicherstellenden Federwirkung der Einrasthaken sind diese über einen Steg mit dem Gehäuse verbunden.

Schließlich sind bei einer letzten vorteilhaften Ausführungsform der Erfindung zwei Paare von Einrasthaken sowie zwei Untergreifvorrichtungen vorgesehen, wobei die zugehörigen Öffnungen auf der Befestigungsplatte annähernd viereckförmig angeordnet sind.

Im folgenden soll die Erfindung anhand von Ausführungsbei spielen im Zusammenhang mit den Zeichnungen dargestellt und erläutert werden. Es zeigen:
- Figur 1: eine Seitenansicht eines in Montagestellung gezeichneten Gehäuses mit erfindungsgemäßen Befestigungsvorrichtungen,
- Figur 2: eine Seitenansicht des Gehäuses nach Figur 1 in Montageendstellung,
- Figur 3: eine Detailansicht W eines Einrasthakens nach Figur 2,
- Figur 4: das Lochbild einer Befestigungsplatte gemäß den Figuren 1 und 2,
- Figur 5: die Vorderansicht eines Gehäuses gemäß den Figuren 1 und 2,
- Figur 6: eine Unteransicht des Gehäuses nach den Figuren 1 und 2,
- Figur 7: eine Seitenansicht eines weiteren Ausführungsbeispieles der Erfindung und
- Figur 8: eine Detailansicht 5 eines Untergreifhakens nach Figur 7.

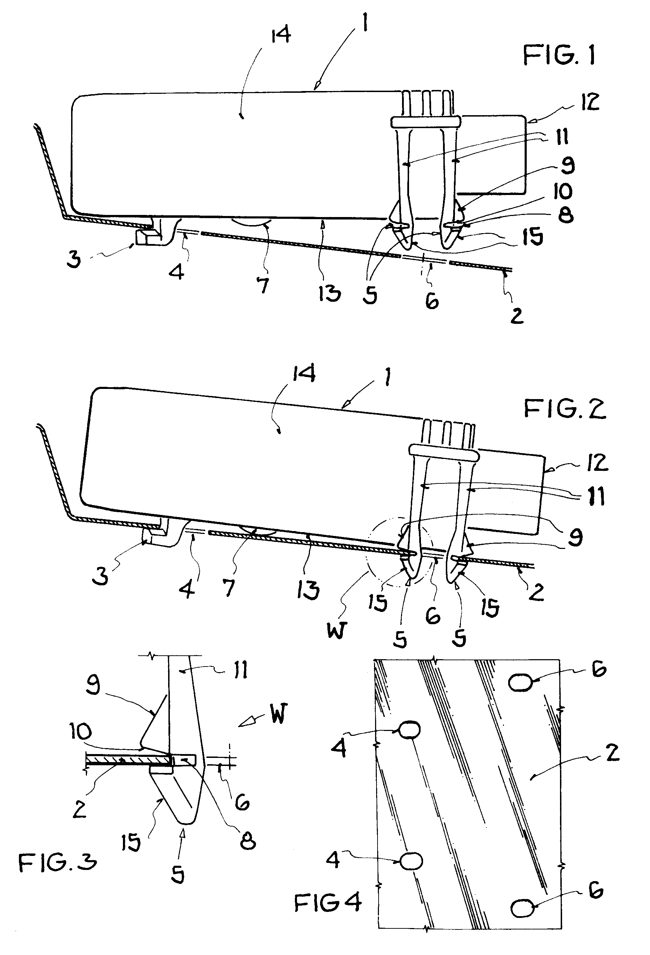

In den Figuren 1 und 2 ist ein mit dem Bezugszeichen 1 bezeichnetes Gehäuse auf eine Befestigungsplatte 2 zu montieren. Hierzu weist das Gehäuse 1 Untergreifhaken 3 sowie Einrasthaken 5 auf, die in Öffnungen 4 bzw. 6 der Montageplatte 2 eingreifen. Dieses Gehäuse 1 besitzt eine quaderförmige Gestalt mit annähernd ebenen Flächen. Auf der der Befestigungsplatte 2 zugewandten Fläche 13 des Gehäuses 1 sind zwei Untergreifhaken 3 angeordnet, wie dies in der Seitenansicht des Gehäuses 1 nach Figur 5 sowie in der Unteransicht des Gehäuses 1 nach Figur 6 zu erkennen ist.

An den sich an die Gehäusefläche 13 anschließenden Stirnflächen 14 des Gehäuses 1 (vgl. Figuren 5 und 6) sind jeweils über einen Steg 11 zwei Einrasthaken 5 an die Flächen 14 angeformt. Dabei sind diese Einrasthaken 5 mit den Stegen 11 so ausgebildet, daß diese über die Gehäusefläche 13 überstehen, so daß - siehe Figur 2 - diese Haken 5 in die Öffnungen 6 einrasten können.

Die für die Untergreifhaken 3 sowie die Einrasthaken 5 erforderlichen Öffnungen 4 und 6 in der Befestigungsplatte 2 sind gemäß dem Lochplan nach Figur 4 viereckförmig, insbesondere trapezförmig angeordnet.

Jeder Rasthaken 5 ist an seinem Ende keilförmig ausgebildet, wobei die entsprechende Keilfläche 15 an den Rand einer Einrastnut 8 geführt ist. Somit steht während des Einrastvorganges diese Keilfläche 15 mit dem Rand der Öffnung 6 in Wirkverbindung und bewirkt dabei ein Ausweichen des Einrasthakens 5 aufgrund der federnden Wirkung des Steges 11, bis der Rand der Befestigungsplatte 2 die Einrastnut 8 erreicht. Nach dem Einrasten der Befestigungsplatte 2 in die Einrastnut 8 federt der Haken 5 wieder in seine ursprüngliche Stellung zurück. Die an einer Seite 14 des Gehäuses 1 angeordneten Einrasthaken 5 sind so angeordnet, daß deren Einrastrichtungen auf einer Geraden liegen, jedoch in entgegengesetzte Richtungen zeigen. So werden während des Einrastvorganges die Einrasthaken 5 in Richtung des Mittelpunktes der Bohrung 6 gedrückt um dann anschließend in entgegengesetzter Richtung in die Befestigungsplatte 2 einzurasten.

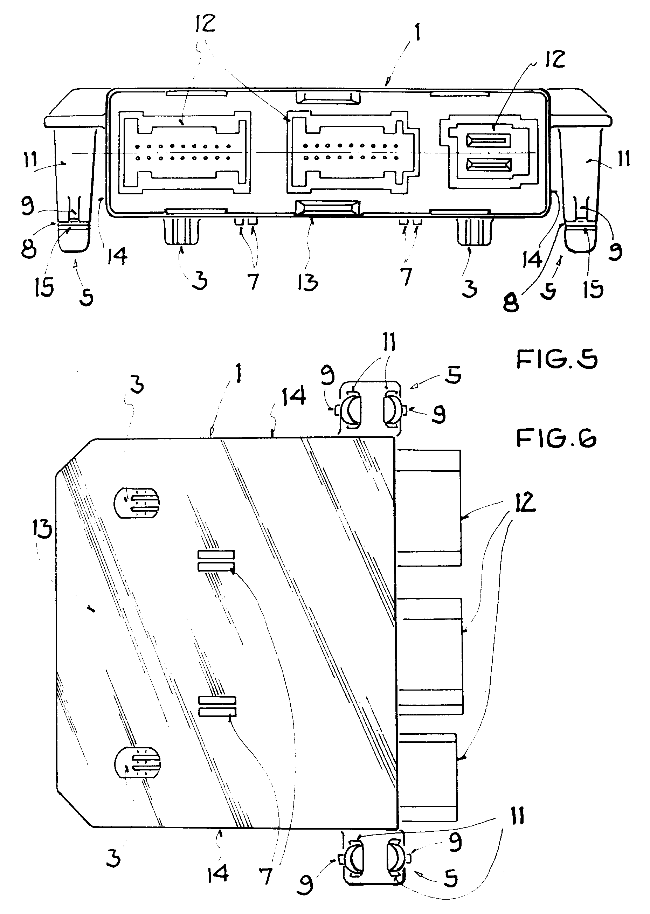

An der dem Hakenende gegenüberliegenden Seite der Einrastnut 8 ist an jedem Einrasthaken 5 eine Klemmnoppe 9 an den Steg 11 angeformt, wie dies deutlich aus Figur 3 zu erkennen ist, die ein Detail W des Einrasthakens 5 nach Figur 2 zeigt. Diese Klemmnoppe 9 weist eine dreiecksförmige Gestalt auf, dessen längste Seite mit dem Steg 11 verbunden ist und dessen kürzeste Seite auf den Rand der Einrastnut 8 zuläuft. Die Aufgabe dieser Klemmnoppe 9 besteht darin, die Befestigungsplatte 2 durch die von der Einrastnut 8 und der kurzen Seite 10 der Klemmnoppe 9 gebildeten Aussparung spielfrei zu fassen.

Um eine spielfreie Montage des Gehäuses 1 mit der Befestigungsplatte 2 zu erreichen, weist die Gehäusefläche 13 des Gehäuses 1 zwei Auflagenoppen 7 auf (vgl. Figuren 1, 2, 5 und 6). Hierdurch wird eine Verspannung des Gehäuses 1 zwischen den Untergreifhaken 3 und diesen Auflagenoppen erreicht, wobei die Höhe dieser Auflagenoppen 7 der lichten Weite der Untergreifhaken 3 abzüglich der Dicke der Befestigungsplatte 2 betragen muß, um diese Wirkung zu erzielen.

Zur Montage des Gehäuses 1 auf die Befestigungsplatte 2 wird das Gehäuse 1 gemäß Figur 1 in bezug auf die Ebene dieser Befestigungsplatte 2 derart schräg gestellt, daß die Untergreifhaken 3 in die Öffnungen 4 eingeführt werden können und hierbei die Befestigungsplatte 2 untergreifen. Anschließend wird das Gehäuse 1 in die Ebene der Befestigungsplatte 2 eingeschwenkt, wodurch gleichzeitig die Einrasthaken 5 unter Ausnutzung ihrer federnden Wirkung in die Öffnungen 6 einrasten.

Somit kann die Montagezeit dieses Gehäuses gegenüber der Verwendung üblicher Verbindungsmittel, wie Schrauben, Nieten oder Schweißverbindungen wesentlich verkürzt werden, wodurch sich erhebliche Kostenvorteile ergeben. Die Realisierung der Untergreifhaken 3 sowie der Einrasthaken 5 kann bei Verwendung von Kunststoffgehäusen in Spritzgußtechnik ausgeführt werden, wobei diese Einhakmittel bzw. Verrastungsmittel an das Gehäuse angeformt werden.

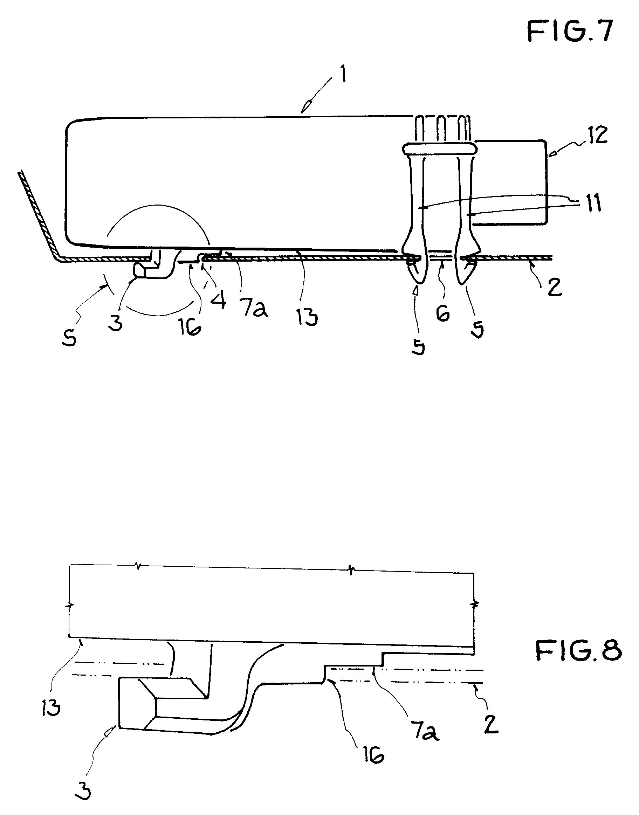

Figur 7 zeigt ein Gehäuse 1, das sich gegenüber dem Ausführungsbeispiel gemäß den Figuren 1 bis 6 nur durch die Ausgestaltung des Untergreifhakens unterscheidet. Bei dem nach Figur 2 auf die Befestigungsplatte 2 montierten Gehäuse 1 besteht die Gefahr, daß bei Einwirkung einer Kraft entgegen der Einführrichtung der Untergreifhaken in die Öffnungen 4, wie dies beispielsweise beim Abziehen eines Steckers aus der Steckerbuchse 12 auftreten kann, das Gehäuse verschoben werden kann, falls die einwirkende Kraft größer ist als die Gesamtkraft aus der Reibkraft zwischen den Auflagenoppen 7 und der Befestigungsplatte 2 und der Federkraft der Rasthaken 5.

Um eine solche Verschiebung zu verhindern, ist am rückwärtigen Teil des Untergreifhakens 3 eine Fixierrippe 16 angeordnet, wie es deutlich in Figur 8 dargestellt ist. Aus Figur 7 ist erkennbar, daß die Länge dieser Fixierrippe 16 in der Ebene der Befestigungsplatte 2 so gewählt ist, daß die Öffnung 4 vollständig verschlossen ist, so daß das Gehäuse 1 in Einführrichtung spielfrei fixiert ist.

In den Figuren 7 und 8 schließt sich an die Fixierrippe 16 stufenförmig eine Auflagenoppe 7a an, die gleichzeitig mit dem Untergreifhaken 3 und der Fixierrippe 16 an das Gehäuse 1 angeformt wird.

Das Gehäuse gemäß dem oben beschriebenen Ausführungsbeispiel kann ein Steuergerät zur Aufnahme entsprechender Elektronikbaugruppen darstellen, insbesondere für Kraftfahrzeuge, wo besonders hohe Anforderungen an die Befestigungssicherheit bestehen. Ist ein solches Steuergerät beispielsweise in einer Kraftfahrzeugtüre montiert, so darf aufgrund der dort auftretenden Erschütterungen das Steuergerät sich nicht von dessen Befestigungsplatte lösen. Die erfindungsgemäße Befestigungsvorrichtung genügt diesen hohen Ansprüchen in der Kraftfahrzeugtechnik.

## Patentansprüche

1. Vorrichtung zur Befestigung eines Gehäuses (1) auf einer Befestigungsplatte (2), gekennzeichnet durch folgende Merkmale:
a) zum Einhaken des Gehäuses (1) in die Befestigungsplatte (2) weist dieses Gehäuse (1) und diese Befestigungsplatte (2) Einhakmittel (3, 4) auf und
b) des weiteren sind Verrastungsmittel (5, 6) an dem Gehäuse (1) und auf der Befestigungsplatte (2) vorgesehen, die derart zusammenwirken, daß beim anschließenden Andrücken des Gehäuses (1) an die Befestigungsplatte (2) eine Verrastung zwischen dem Gehäuse (1) und der Befestigungsplatte (2) entsteht.

2. Vorrichtung nach Anspruch 1, dadurch gekennzeichnet, daß als Einhakmittel das Gehäuse (1) eine Untergreifvorrichtung (3) aufweist und auf der Befestigungsplatte (2) derart eine Öffnung (4) angeordnet ist, daß die Untergreifvorrichtung (3) durch die Öffnung (4) hindurch die Befestigungsplatte (2) untergreift.

3. Vorrichtung nach Anspruch 2, dadurch gekennzeichnet, daß als Untergreifvorrichtung (3) ein Untergreifhaken vorgesehen ist.

4. Vorrichtung nach Anspruch 2, dadurch gekennzeichnet, daß die Untergreifvorrichtung (3) pilzförmig ausgebildet ist.

5. Vorrichtung nach einem der vorangehenden Ansprüche, dadurch gekennzeichnet, daß im Bereich der Einhakmittel (3, 4) am Gehäuse (1) wenigstens eine Auflagenoppe (7, 7a) vorgesehen ist.

6. Vorrichtung nach Anspruch 5, dadurch gekennzeichnet, daß die Höhe der Auflagenoppe (7, 7a) der lichten Weite der Untergreifvorrichtung (3) abzüglich der Dicke der Befestigungsplatte (2) entspricht.

7. Vorrichtung nach einem der vorangehenden Ansprüche, dadurch gekennzeichnet, daß als Verrastungsmittel das Gehäuse (1) einen Einrasthaken (5) trägt und auf der Befestigungsplatte (2) eine Öffnung (6) angeordnet ist.

8. Vorrichtung nach Anspruch 7, dadurch gekennzeichnet, daß der Einrasthaken (5) eine Einrastnut (8) und ein keilförmig ausgebildetes Hakenende aufweist, wobei die Keilfläche das Hakenende mit dem Nutrand der Einrastnut (8) verbindet.

9. Vorrichtung nach einem der Ansprüche 7 oder 8, dadurch gekennzeichnet, daß auf der dem Hakenende abgewandten Seite der Einrastnut (8) eine Klemmnoppe (9) angeordnet ist.

10. Vorrichtung nach Anspruch 9, dadurch gekennzeichnet, daß die Klemmnoppe (9) eine auf die Einrastnut (8) schräg zulaufende Fläche (10) aufweist.

11. Vorrichtung nach einem der Ansprüche 7 bis 10, dadurch gekennzeichnet, daß zwei Einrasthaken (5) vorgesehen sind, die gleichzeitig in eine Öffnung (6) auf der Befestigungsplatte (2) einrasten.

12. Vorrichtung nach Anspruch 11, dadurch gekennzeichnet, daß die Einrasthaken (5) derart angeordnet sind, daß deren Einrastrichtungen auf einer Geraden liegen, die Einrastrichtungen jedoch entgegengesetzt gerichtet sind.

13. Vorrichtung nach einem der Ansprüche 7 bis 12, dadurch gekennzeichnet, daß der Einrasthaken (5) federnd über einen Steg (11) mit dem Gehäuse (1) verbunden ist.

14. Vorrichtung nach einem der Ansprüche 11 bis 13, dadurch gekennzeichnet, daß zwei Paare von Einrasthaken (5) sowie zwei Untergreifvorrichtungen (3, 4) vorgesehen sind, wobei die zugehörigen Öffnungen (3, 6) auf der Befestigungsplatte (2) annäherend viereckförmig angeordnet sind.
